# EUROPÄISCHE PATENTSCHRIFT

(11) **EP 2 007 505 B1**
(45) Veröffentlichungstag und Bekanntmachung des Hinweises auf die Patenterteilung: **15.06.2011**
(21) Anmeldenummer: 07727748.1
(22) Anmeldetag: 03.04.2007
(51) Int. Cl.: B01D 61/06, B01D 61/08, B01D 61/10, C02F 1/44, F04B 43/06

(54) **KLEINMENGEN-UMKEHROSMOSE-ANLAGE MIT DOPPELVENTIL-PERMEATPUMPE**
SMALL SCALE REVERSE OSMOSIS SYSTEM COMPRISING A DOUBLE VALVE PERMEATE PUMP
INSTALLATION D'OSMOSE INVERSE EN PETITES QUANTITES, COMPRENANT UNE POMPE A PERMEAT A DOUBLE VANNE

(30) Priorität: 04.04.2006 DE 102006015674
(43) Veröffentlichungstag der Anmeldung: 31.12.2008
(73) Patentinhaber: Wapura Trinkwasserreinigungs Gmbh, 48465, Schüttorf (DE)
(72) Erfinder: WOLBERS, Ralf, 48465 Schüttorf (DE)
(74) Vertreter: Gröschel, Andreas
(86) Internationale Anmeldenummer: PCT/EP2007/053277
(87) Internationale Veröffentlichungsnummer: WO 2007/115986

(56) Entgegenhaltungen:
- WO-A-95/30472
- US-A- 2 679 209
- US-A- 5 460 716
- US-A1- 2003 012 668

## Beschreibung

Die Erfindung betrifft eine Kleinmengen-Umkehrosmose-Anlage, mit einem Umkehrosmosemodul, welches eine Membran aufweist und einen Rohwassereinlauf sowie einen Konzentratauslauf, beide auf der einen Seite der Membran angeordnet, sowie einen Permeatauslauf, der am Umkehrosmosemodul auf der anderen Seite von der Membran angeordnet ist. Um Verblockungen der Membran zu vermeiden, muss regelmäßig das Umkehrosmosemodul durchspült werden oder es muss permanent mit einem deutlichen Wasserüberschuss betrieben werden, so dass die Permeatausbeute in einem sehr geringen Verhältnis zur eingesetzten Rohwassermenge steht und der Betrieb der Umkehrosmose-Anlage dementsprechend wirtschaftlich ungünstig ist. Als Ausbeute wird dabei das Verhältnis von verworfenem Konzentrat zu verwertbarem Permeat bezeichnet, z. B. 1:1, oder das Verhältnis von eingesetztem Rohwasser zu verwertbarem Permeat, z. B. 50 %. In beiden vorgenannten Beispielsfällen ist die gleiche Ausbeute bezeichnet, denn eine eingesetzte Rohwassermenge von 100% teilt sich in beiden Fällen in 50% Konzentrat und 50% Permeat auf. Typische Kleinmengen Anlagen arbeiten in einem Verhältnis von 3:1 und schlechter, was einer Ausbeute von 25% und weniger entspricht.

Als Kleinmengen-Anlage wird dabei eine so genannte "Point of use"-Anlage bezeichnet, die direkt beim Endverbraucher installiert ist, z. B. in Restaurants oder privaten Haushalten, und die Permeatmengen von etwa 20 l bis etwa 1.000 l Tagesleistung erzeugen. Eine derartige Anlage ist z. B. in der EP 0 567 751 B1 beschrieben.

Aus der Praxis sind umkehrosmose-Anlagen wie gemäß der WO 95/30472-A bekannt, die Permeat-pumpen aufweisen, wobei die Permeatpumpen hinter dem Konzentratregler angeschlossen werden und nur ein mit einem Steuerventil am Antriebsausgang versehen sind. Dabei besteht der Nachteil, dass Abwasser während der Füllphase der Permeatkammer ungenutzt über den Konzentratregler und das offene Steuerventil abfließt. Hohe Ausbeuten von beispielsweise besser als 2 : 1 sind nicht möglich, da die Ausstoßzeit in der Pumpphase zu lang wird und sich daher der sich aufbauende Rückstau negativ auf Leistung und Wirkungsgrad der Umkehrosmose-Anlage auswirkt.

Zudem muss der Konzentratregler immer an die Leistung des Umkehrosmosemoduls angepasst werden.

Der Erfindung liegt die Aufgabe zugrunde, eine Umkehrosmose-Anlage zu schaffen, die mit einer möglichst hohen Ausbeute betrieben werden kann, möglichst einfach aufgebaut ist und möglichst einfach an verschiedene Permeatleistungen angepasst werden kann.

Erfindungsgemäß wird daher vorgeschlagen eine Kleinmengen-Umkehrosmose-Anlage, mit einem Umkehrosmosemodul, einer vom Umkehrosmosemodul zu einer Auslassleitung führen- den Konzentratleitung, einer vom Umkehrosmosemodul zu einem Speichertank (5) führen- den Permeatleitung, sowie einer an die Konzentratleitung und an die Permeatleitung angeschlossenen Permeatpumpe (4) mit einer Verdrängungseinheit (12)und zwei Steuerkanälen (112, 113), so auszustatten, dass zwei von der Verdrängungseinheit (12) lageabhängig wechselseitig gesteuerte Ventile, nämlich ein Konzentrateingangsventil (13) und ein Konzentratausgangsventil (15), in einer gemeinsamen Steuerschieber- und Steuerkanalöffnungskombination (109, 121) integriert sind.

In der oben beschriebenen Kleinmengen-Umkehrosmose-Anlage kann die Permeatpumpe (4) als Membranpumpe ausgestaltet sein.

Erfindungsgemäß wird zudem vorgeschlagen, die in der oben genannte Kleinmengen-Umkehrosmose-Anlage vorhandene Steuerschieber- und Steuerkanalöffnungskombination so auszugestalten beziehungsweise anzusteuern, dass beide integrierten Ventile gleichzeitig mindestens teilweise geöffnet sind und in dieser Spülstellung festgehalten werden können.

Als weiteres mögliches Ausstattungsmerkmal wird vorgeschlagen, die vorgenannte Kleinmengen-Umkehrosmose-Anlage mit einer Spülleitung zwischen den beiden Ventilen auszustatten, wobei die Spülleitung eine in der Permeatpumpe vorgesehene Arbeitskammer umgeht.

Desgleichen kann die oben genannte Kleinmengen-Umkehrosmose-Anlage erfindungsgemäß mit einer Steuerschieber- und Steuerkanalöffnungskombination so ausgestaltet werden beziehungsweise kann diese so angesteuert werden, dass beide integrierten Ventile gleichzeitig mindestens teilweise geöffnet sind und die Zeitdauer der gemeinsamen Öffnung gesteuert werden kann.

Damit lassen sich angepasst an die Erfordernisse des Rohwassers Ausbeuten von weniger als 50% einstellen. Auf diese Weise kann bei größerer Härte des Rohwassers ein Verblocken der UmkehrosmoseMembran im Modul wirksam verhindert werden, ohne dass zu große Einbußen hinsichtlich der erfindungsgemäß guten Ausbeute entstehen.

Desgleichen kann die oben genannte Kleinmengen-Umkehrosmose-Anlage erfindungsgemäß mit einer Steuerschieber- und Steuerkanalöffnungskombination so ausgestaltet werden beziehungsweise kann diese so angesteuert werden, dass am Ventil ein definierter Beipass entsteht.

Ein weiteres Merkmal der oben genannten Kleinmengen-Umkehrosmose-Anlage kann erfindungsgemäß auch sein, dass die Steuerschieber- und Steuerkanalöffnungskombination und/ oder die Permeatpumpe oder Teile der Permeatpumpe in den Körper einer sogenannten Manifold-Unit implementiert sind. Als Manifold-Unit bezeichnet man hierbei eine Kleinmengen-Umkehrosmose-Anlage, bei der wichtige Verbindungswege und Bauteile in einem gemeinsamen Block als Kunststoff als Spritzgussteil und/oder Spangebend aus einem oder mehreren Teilen hergestellt werden. Kennzeichnend für eine solche Anlage ist, dass es in der Regel kaum Fittings und Leitungsverbindungen zwischen den sonst üblichen Baugruppen gibt und damit der Montageaufwand klein gehalten wird. Zudem wird die Gefahr eines falschen Anschlusses der einzelnen Komponenten vermindert.

Die Kleinmengen-Umkehrosmose-Anlage kann erfindungsgemäß auch so ausgestaltet sein, dass die Permeatpumpe wahlweise an das Rohwasser statt an das Konzentrat angeschlossen ist.

Die Erfindung betrifft weiterhin die Verwendung einer Permeatpumpe mit einer Verdrängungseinheit und zwei Steuerkanälen, angeschlossen an die Konzentratleitung und an die Permeatleitung eines Umkehrosmosemoduls, wobei die Pumpe zwei von der Verdrängungseinheit lageabhängig wechselseitig gesteuerte Ventile, nämlich ein Konzentrateingangsventil und ein Konzentratausgangsventil, umfasst, die in einer gemeinsamen Steuerschieber- und Steuerkanalöffnungskombination integriert sind, in einer erfindungsgemäßen Kleinmengen- Umkehrosmose Anlage.

Der Konzentratfluss wird am Antriebseingang der Permeatpumpe gesperrt, während sich die Pumpkammer füllt. Zur Förderung in den Speicher wird dieses Ventil geöffnet und das Ausgangsventil der Antriebsseite geschossen.

Der Konzentratzufluss wird während der Füllung der Pumpkammer geschlossen. Dadurch fließt im Normalbetrieb nur dann Abwasser in die Permeatpumpe, wenn Pumpleistung gefordert ist. Ein Konzentratregler der die Flussgeschwindigkeit des Konzentrats steuert ist nicht mehr nötig. Daher kann das Permeat wesentlich schneller ausgestoßen werden, so dass die Zeitdauer verkürzt wird, während welcher das Umkehrosmosemodul mit Gegendruck beaufschlagt ist.

Zudem regelt die Pumpe auf diese Weise automatisch eine Ausbeute von etwa 50 %, also einem Abwasser zu Permeat Verhältnis von etwa 1: 1 mit einer Art Impulsspülung, da während des Arbeitstaktes die Flussgeschwindigkeit höher ist als In den Anlagen nach dem Stand der Technik. Hier findet ein kontinuierlicher Fluss statt, der in der Regel etwa drei mal so hoch wie der Permeatfluss ist. Bei kleinen Membranen sind dies oft nur etwa 100 ml/min. Dies führt oft zu so genannten Totzonen auf der Membranoberfläche, da nicht überall Wasser fließt. Impulsartige, hohe Überströmungen können hier mengenmäßig kleiner sein, reinigen die Membrane aber viel wirksamer. Diese werden durch entsprechend große Ventilöffnungen an der Steuerschieber- und Steuerkanalöffnungskombination erreicht. Während der Ausstoßphase können so Werte von etwa über 1000 ml/min kurzzeitig erreicht werden.

Sollte bei entsprechender Rohwasserqualität eine Ausbeute kleiner als 50% nötig sein, so kann zusätzliches Abwasser über einen parallelen Konzentratregler geregelt werden oder über besondere Ansteuerungen des Steuerschiebers.

Der Abwasserfluss von der Permeatpumpe nach außen liegt vorschlagsgemäß nur noch auf dem Niveau der Permeatleistung der Umkehrosmose-Anlage. Eine Geräuschentwicklung durch das regelmäßig pulsierend abfließende Konzentrat wie bei derzeit handelsüblichen Permeatpumpen wird durch die vorschlagsgemäße Ausgestaltung der Umkehrosmoseanlage weitgehend unterbunden. Gegebenenfalls kann abweichend von dem vorschlagsgemäß möglichen, sehr hohen Ausbeutewert 1 : 1 abgewichen werden und ein Verhältnis von beispielsweise 1 : 3 oder 1 : 5 eingestellt werden, wenn beispielsweise ein Hersteller, der im Umkehrosmosemodul verwendeten Membran ein derartiges Verhältnis fordert, um auszuschließen, dass die Membran verblockt.

Ein Ausführungsbeispiel der vorliegenden Erfindung wird anhand der rein schematischen Darstellungen nachfolgend näher erläutert. Dabei zeigt
- Fig. 1: eine diagrammartige Darstellung einer Kleinmengen- Umkehrosmose-Anlage in einfacher Ausführung welche ohne Stromanschluss betrieben werden kann.
- Fig. 2: eine diagrammartige Darstellung einer Kleinmengen- Umkehrosmose-Anlage mit elektronisch gesteuerten Im- pulsspülsystem.
- Fig. 3: eine diagrammartige Darstellung einer Kleinmengen- Umkehrosmose-Anlage mit zwei parallel geschalteten Doppelventil Permeatpumpen und elektronisch gesteuer- ten Impulsspülsystem
- Fig. 4: als Detailansicht den Bereich einer Doppelventil- Permeatpumpe, wie sie in einer Anlage gemäß Fig. 1 bis 3 verwendet werden kann.

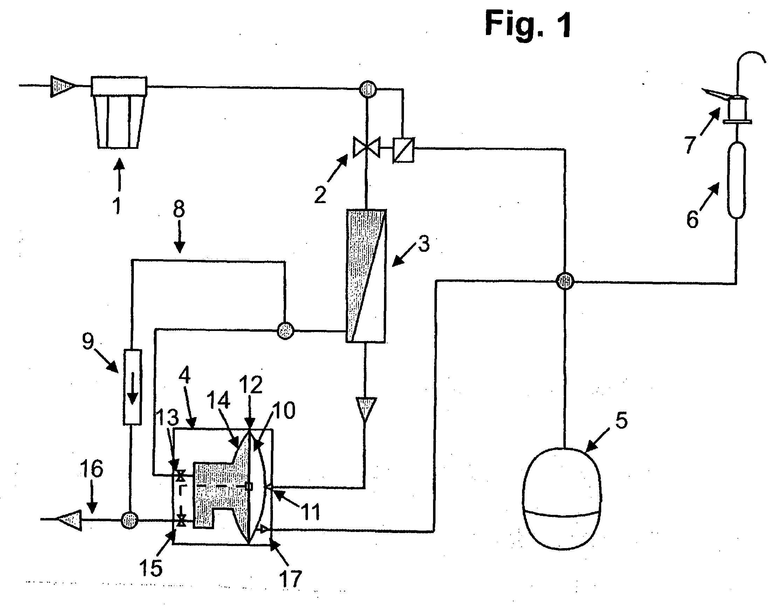

In Fig. 1 ist mit 1 ein Vorfilter bezeichnet, in den entsprechend der eingezeichneten Pfeilrichtung Rohwasser geführt wird, beispielsweise aus einem öffentlichen Trinkwasserversorgungsnetz. Das gefilterte Rohwasser gelangt zu einem Hydraulischen Abschaltventil 2. Dieses Ventil benutzt den Druck im Speichertank als Referenz zum Rohwasserdruck und sperrt die Wasserzufuhr zum System, wenn der Speichertank etwa 90% des Leitungsdruckes führt. Das Ventil schaltet nach einer gewissen Entnahmemenge aus dem Speichertank wieder auf Durchgang. Von dort gelangt das Rohwasser zum Umkehrosmosemodul 3. Das durch die Membrane im Umkehrosmosemodul 3 gefilterte Permeat wird über eine Permeatpumpe 4 in den Speichertank 5 gefördert. Von dort aus kann es über den Nachfilter 6 am Entnahmehahn 7 entnommen werden.

Das am Umkehrosmosemodul 3 anfallende Konzentrat wird einerseits zum Antrieb der Permeatpumpe 4 verwendet zum anderen über eine Ausgleichsleitung 8 und einem Konzentratregler 9 dem Abwasser zugeführt.

Die Permeatpumpe 4 arbeitet wie folgt. Das durch die Membrane im Umkehrosmosemodul 3 gefilterte Permeat füllt die Permeatkammer 10 der Permeatpumpe 4 über das Pumpenventil 11 und lenkt dabei die Membrane 12 nach links aus. Das Steuerventil 13 ist in dieser Phase geschlossen. Das in der Kammer 14 vorhandene Konzentrat fließt durch das offene Ventil 15 in die Auslassleitung 16. Dieser Vorgang wird durch das Umsteuern der Ventile 13 und 15 beendet, wenn die Membrane 12 ganz nach links ausgewandert ist. Dies wird durch eine sensorische Verbindung zwischen den Ventilen 13 und 15 und der Membrane 12 erreicht. Da Ventil 15 nun geschlossen wird, fließt Konzentrat über das offene Ventil 13 in die Konzentrat- Kammer 14 und drückt die Membrane 12 zurück.

Das Vorher in der Permeatkammer 10 gesammelte Permeat wird über das Pumpenventil 17 in den Speichertank 5 gedrückt. Dieser Vorgang dauert so lange, bis die Membrane 12 nach rechts ausgelenkt wurde und das Permeat aus der Permeatkammer 10 größtenteils in den Speichertank 5 gefördert wurde. Nun werden die Ventile 13 und 15 wieder umgesteuert und der Füllvorgang der Permeatkammer 10 beginnt von vorne.

Diese Vorgänge können sich praktisch so lange wiederholen, bis der Druck im Speichertank 5 den Eingangsdruck der Wasserversorgung erreicht hat oder die Zufuhr zum Membranmodul 3 über das hydraulische Abschaltventil 2 geschlossen wird. Da die wirksame Oberfläche der Membrane 12 zu den Kammern 10 und 14 gleich groß ist, wird die gleiche Menge Konzentrat abgegeben wie Permeat in den Speichertank 5 gefördert wird.

Durch die gegenläufige Betätigung beider Konzentratventile 13 und 15 ist der Fluss von Konzentrat durch die Auslassleitung 16 stark begrenzt, da stets eines der beiden Konzentratventile 13 und 15 geschlossen ist. Demgegenüber kann jedoch auch ohne die Ausgleichsleitung 8 und den Durchflussbegrenzer 9 eine Mindest-Konzentratflussmenge eingestellt werden, indem beispielsweise durch Form und Lage der Bohrungen in der Ventilplatte und Überschneidungen mit den Steuerkonturen des Ventilschiebers In Verbindung mit der Geschwindigkeitsregelung des Ventilschiebers Betriebszustände möglich sind in denen praktisch beide Ventilwege offen sind.

Das Konnzentrat- Eingangsventil 13 kann auch bewusst nicht vollkommen dicht schließend ausgeführt sein, sondern vielmehr einen gewissen Leckfluss zulassen. Wahlweise kann zum Konzentrat- Eingangsventil 13 ein Beipass mit einem Durchflussbegrenzer parallel geschaltet werden. Dadurch fließt während der Füllphase der Permeatkammer 10 Konzentrat über das teilgeschlossene KonzentratEingangsventil 13 oder den Beipass und das offene Konzentrat- Ausgangsventil 15. Während der Pumpphase steuern die Ventile 13 und 15 um und das gesamte Konzentrat steht für den Antrieb der Pumpe zur Verfügung.

Der Leckfluss kann auch durch die Umgehungsleitung 8 und einen entsprechenden Durchflussregler 9 gewährleistet werden, wobei auf diese Umgehungsleitung 8 und den zugehörigen Durchflussregler 9 bei entsprechender Einstellung des Konzentratventils 13 oder durch die Benutzung des internen Beipasses, wirtschaftlich vorteilhaft verzichtet werden kann.

Die Menge des vorerwähnten Leckflusses kann sich beispielsweise nach Vorgaben des Herstellers des Umkehrosmosemoduls bzw. des Membranherstellers richten, wenn dieser beispielsweise zum sicheren Betrieb eine gewisse Mindestdurchflussmenge und damit eine vorgeschriebene maximale Ausbeute vorschreibt.

Zur Spülung des Umkehrosmosemoduls 3 können beide Konzentratventile 13 und 15 abweichend von ihrer grundsätzlich gegenläufigen Betätigung gleichzeitig geöffnet werden, so dass ein ungehinderter Konzentratfluss vom Umkehrosmosemodul bis zur Auslassleitung 16 erfolgen kann, um das Umkehrosmosemodul 3 und die konzentratführenden Leitungsabschnitte der Anlage zu spülen.

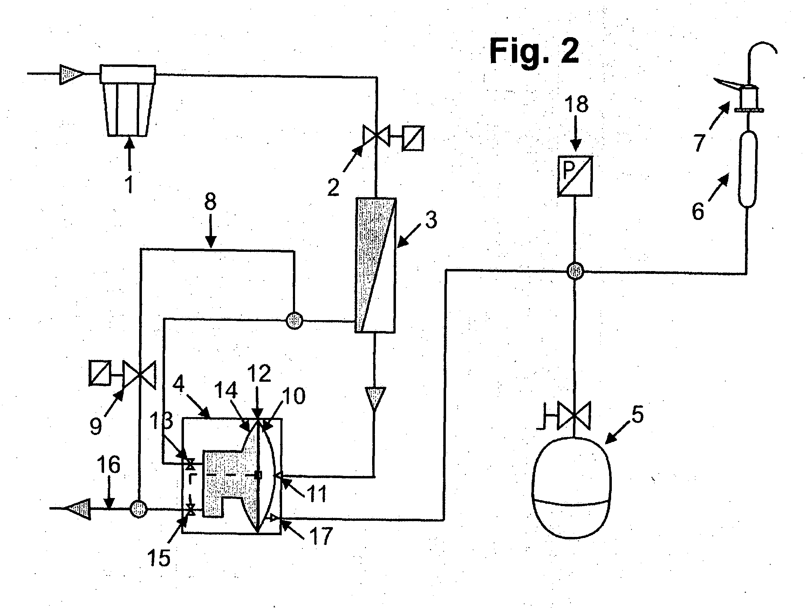

Fig. 2 beschreibt abweichend eine Umkehrosmose Kleinmengen Anlage in der das hydraulische Abschaltventil durch ein Rohwasser-Magnetventil 2 und der Konzentratregler durch ein Spül- Magnetventil 9 ersetzt sind und die Befüllung des Speichertanks über den Druckschalter 18 und eine Elektronische Anlagensteuerung gesteuert

Um im Sinne einer Impulsspülung eine besonders hohe Durchflussmenge in kurzer Zeit zu ermöglichen, kann das in Fig. 2 angedeutete Spül- Magnetventil 9 in der Spülleitung 8 zyklisch geöffnet werden. Das Konzentrat muss nicht die Permeatpumpe 4 durchströmen, falls beispielsweise die Permeatpumpe 4 einen für eine Impulsspülung hinderlichen Strömungswiderstand darstellen würde.

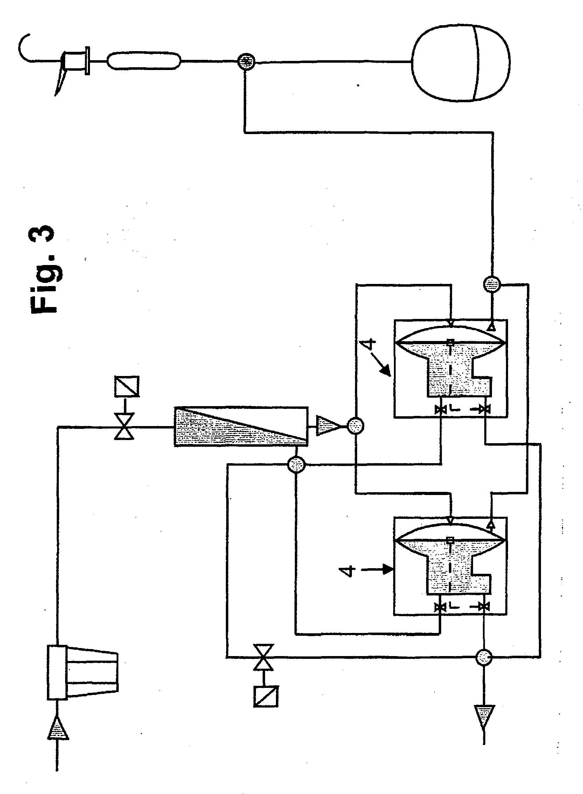

Fig. 3 bezeichnet eine Anlage in der wieder im Vorfilter 1 zugeführtes Rohwasser vorgereinigt wird. Danach wird es über das Rohwasser-Magnetventil 2 dem Umkehrosmose- Modul 3 zugeführt und hier aber abweichend über 2 parallel geschaltete Permeatpumpen 4 in den Speichertank 5 gefördert.

Der Vorteil dieser Anordnung besteht darin, dass sich die beiden Permeatpumpen die Arbeit teilen. Neben der doppelten möglichen Leistung besteht hier der Vorteil, dass sich die Pumpen nach kurzer Betriebszeit nie gleichzeitig Permeat ausstoßen und somit immer eine der beiden Permeatpumpen 4 Permeat aufnehmen können. Dadurch ist die Produktion von Permeat durch das Umkehrosmose- Modul 3 möglich ohne das dort Gegendruck entsteht, was beim Einsatz von nur einer Permeatpumpe während der Ausstoßphase nicht gegeben wäre.

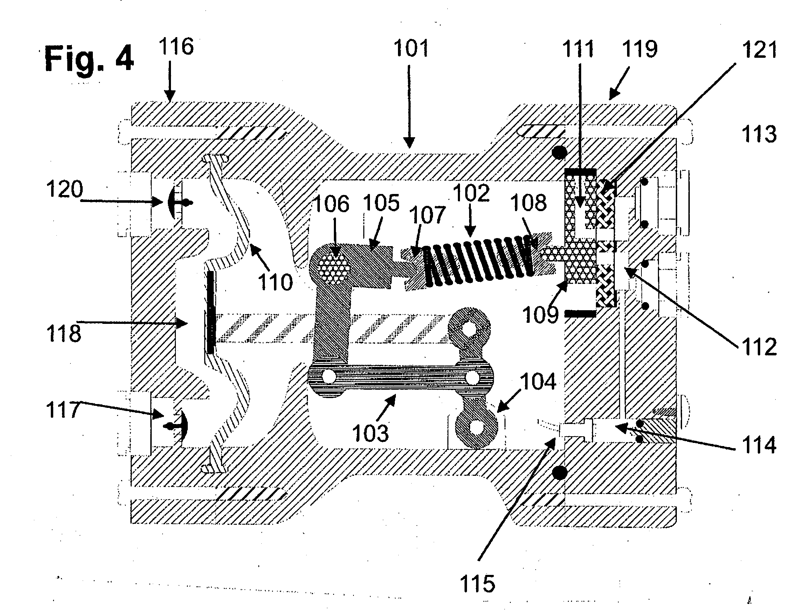

Fig. 4 zeigt die Detail Ansicht einer beispielhaften Doppelventil - Permeatpumpe. Ein Hauptgehäuse 101 trägt die Schaltmechanik bestehend aus einem Federelement 102, einer Anordnung von Hebeln 103 und 104 einem Umlenkhebel 105. Der Umlenkhebel 105 ist im Drehpunkt 106 gelagert. Das Federelement 102 ist im Drehpunkt 107 am Umlenkhebel 105 und am Anlenkpunkt 108 des Ventilschiebers 109 gelagert. Je nach Stellung des beweglichen Drehpunktes 107 zum feststehenden Drehpunkt 106 lenkt das Federelement über den Winkel zum Anlenkpunkt 108 den Ventilschieber 109 aus.

Eine Membrane 110 ist über die Hebel 103 und 104 mit dem Umlenkhebel 105 verbunden, wodurch sich der Drehpunkt 107 je nach Stellung der Membrane 110 verändert. Das Federelement 102 öffnet wechselseitig über einen Kanal 111 im Steuerschieber 109 einen Weg entweder zum Konzentrat- Einlass 112 oder zum Konzentrat- Auslass 113 womit sich die mögliche Laufrichtung der Membrane 110 steuert In einer Optionsbohrung 114 ist beispielsweise ein Konzentrat- Durchflussbegrenzer 115 als Beipass zum Konzentrat- Eingangsventil 112 eingebaut.

Auf der Pumpenseite wird das Hauptgehäuse 101 durch den Pumpendeckel 116 verschlossen. Über das Permeat- Einlassventil 117 welches ein Rückschlagventil darstellt gelangt produziertes Permeat in die Pumpkammer 118 und drückt bei geöffnetem Konzentrat- Ausgangsventil 113 und geschlossenem Konzentrat Eingangsventil 112 die Membrane 110 in Richtung des Steuergehäusedeckels 119. Kurz vor der physikalischen Endposition im Hauptgehäuse 101 wird der Ventilschieber 109 umgesteuert und das auf der Konzentratseite einströmende Konzentrat drückt die Membrane 110 zurück. Dabei wird das in der Permeatkammer 118 gesammelte Permeat über das Permeat- Auslassventil 120 aus der Pumpe herausgepresst. Dieser Arbeitstakt wird wiederum vor dem physikalischen Endpunkt der Membrane 110 im Pumpendeckel 116 durch Umsteuerung des Ventilschiebers 109 beendet. Die Füllphase der Permeatkammer 118 beginnt von neuem.

## Patentansprüche

1. Kleinmengen-Umkehrosmose-Anlage mit einem Umkehrosmosemodul, einer vom Umkehrosmosemodul zu einer Auslassleitung führenden Konzentratleitung, einer vom Umkehrosmosemodul zu einem Speichertank (5) führenden Permeatleitung, sowie einer an die Konzentratleitung und an die Permeatleitung angeschlossenen Permeatpumpe (4) mit einer Verdrängungseinheit (12) und zwei Steuerkanälen (112, 113), **dadurch gekennzeichnet, dass** zwei von der Verdrängungseinheit (12) lageabhängig wechselseitig gesteuerte Ventile, nämlich Kanzentrateingangsventil (13) und Konzentratsausgangsventil (15), in einer gemeinsamen Steuerschieber- und Steuerkanalöffnungskombination (109, 121) integriert sind.

2. Kleinmengen-Umkehrosmose-Anlage nach Anspruch 1,
**dadurch gekennzeichnet, dass** die Permeatpumpe (4) als Membranpumpe ausgestaltet ist.

3. Kleinmengen-Umkehrosmose-Anlage nach Anspruch 1 oder 2,
**dadurch gekennzeichnet, dass** die Steuerschieber- und Steuerkanalöffnungskombination so ausgestaltet beziehungsweise angesteuert werden kann, dass beide integrierten Ventile gleichzeitig mindestens teilweise geöffnet sind und in dieser Spülstellung festgehalten werden können.

4. Kleinmengen-Umkehrosmose-Anlage nach einem der vorhergehenden Ansprüche, **gekennzeichnet durch** eine Spülleitung (20) zwischen den beiden Ventilen, wobei die Spülleitung (20) eine in der Permeatpumpe vorgesehene Arbeitskammer umgeht.

5. Kleinmengen-Umkehrosmose-Anlage nach einem der vorhergehenden Ansprüche, **dadurch gekennzeichnet, dass** die Steuerschieber- und Steuerkanalöffnungskombination (109, 121) so ausgestaltet beziehungsweise angesteuert wird, dass beide integrierten Ventile (13) und (15) gleichzeitig mindestens teilweise geöffnet sind und die Zeitdauer der gemeinsamen Öffnung gesteuert werden kann.

6. Kleinmengen-Umkehrosmose-Anlage nach einem der vorhergehende Ansprüche, **dadurch gekennzeichnet, dass** die Steuerschieber- und Steuerkanalöffnungskombination (109, 121) so ausgestaltet beziehungsweise angesteuert wird, dass am Ventil (112) ein definierter Bypass entsteht.

7. Kleinmengen-Umkehrosmose-Anlage nach einem der vorhergehenden Ansprüche, **dadurch gekennzeichnet, dass** die Steuerschieber- und Steuerkanalöffnungskombination (109, 121) und/ oder die Permeatpumpe (4) oder Teile der Permeatpumpe in den Körper einer Manifold-Unit implementiert sind.

8. Kleinmengen-Umkehrosmose-Anlage nach einem der vorhergehenden Ansprüche, **dadurch gekennzeichnet, dass** die Permeatpumpe (4) wahlweise an das Rohwasser statt an das Konzentrat angeschlossen ist.

9. Verwendung einer Permeatpumpe mit einer Verdrängungseinheit (12) und zwei Steuerkanälen (112, 113), angeschlossen an die Konzentratleitung und an die Permeatleitung eines Umkehrosmosemoduls, wobei zwei von der Verdrängungseinheit (12) lageabhängig wechselseitig gesteuerten Ventile, nämlich ein Konzentrateingangsventil (13) und ein Konzentratausgangsventil (15), in einer gemeinsamen Steuerschieber- und Steuerkanalöffnungskombination (109, 121) integriert sind, in einer Kleinmengen-Umkehrosmose-Anlage nach einem der Ansprüche 1 bis 8.

## Claims

1. Small-volume reverse osmosis system with a reverse osmosis module, a concentrate line leading from the reverse osmosis module to an outlet line, a permeate line leading from the reverse osmosis module to a storage tank (5), as well as a permeate pump (4) connected to the concentrate line and to the permeate line with a displacement unit (12) and two control channels (112, 113), **characterised in that** two valves, namely a concentrate inlet valve (13) and a concentrate outlet valve (15), that are alternately switched by the displacement unit (12) depending on the position are integrated into a joint control slide and control channel opening combination (109, 121).

2. Small-volume reverse osmosis system according to claim 1, **characterised in that** the permeate pump (4) is designed as a diaphragm pump.

3. Small-volume reverse osmosis system according to claim 1 or 2, **characterised in that** the control slide and control channel opening combination are designed and/or can be controlled so that both integrated valves are at least partly open at the same time and can be held in this flushing position.

4. Small-volume reverse osmosis system according to one of the above claims **characterised by** a flushing line (20) between the two valves, whereby the flushing line (20) bypasses one of the working chambers provided in the permeate pump.

5. Small-volume reverse osmosis system according to one of the above claims **characterised in that** the control slide and control channel opening combination (109, 121) are designed and/or will be controlled so that the two integrated valves (13) and (15) will be at least partly open at the same time and so that the time periods of the joint opening can be controlled.

6. Small-volume reverse osmosis system according to one of the above claims **characterised in that** the control slide and control channel opening combination (109, 121) are designed and/or will be controlled so that a defined bypass is created at the valve (112).

7. Small-volume reverse osmosis system according to one of the above claims **characterised in that** the control slide and control channel opening combination (109, 121) and/or the permeate pump (4) or parts of the permeate pump are implemented within the body of a manifold unit.

8. Small-volume reverse osmosis system according to one of the above claims **characterised in that** the permeate pump (4) can, by choice, be connected to the raw water instead of to the concentrate.

9. Use of a permeate pump with a displacement unit (12) and two control channels (112, 113) connected to the concentrate line and to the permeate line of a reverse osmosis module, wherein two valves, namely a concentrate inlet valve (13) and a concentrate outlet valve (15), that are alternately switched by the displacement unit (12) depending on the position are integrated into a joint control slide and control channel opening combination (109, 121) in a small-volume reverse osmosis system according to one of the claims 1 to 8.

## Revendications

1. Installation d'osmose inverse pour petites quantités, avec un module d'osmose inverse, avec une conduite de concentrat menant du module d'osmose inverse à une conduite d'évacuation, avec une conduite de perméat menant du module d'osmose inverse à un réservoir de stockage (5) ainsi qu'avec une pompe de perméat (4) raccordée à la conduite de concentrat et à la conduite de perméat et munie d'une unité de refoulement (12) et de deux canaux de commande (112, 113), **caractérisée en ce que** deux soupapes commandées alternativement par l'unité de refoulement (12) en fonction de la position, à savoir une soupape d'entrée de concentrat (13) et une soupape de sortie de concentrat (15), sont intégrées dans une combinaison commune de soupape pilote et d'ouverture de canal de commande (109, 121).

2. Installation d'osmose inverse pour petites quantités selon la revendication 1, **caractérisée en ce que** la pompe de perméat (4) est conçue comme une pompe à membrane.

3. Installation d'osmose inverse pour petites quantités selon la revendication 1 ou 2, **caractérisée en ce que** la combinaison de soupape pilote et d'ouverture de canal de commande peut être conçue et commandée de telle sorte que les deux soupapes intégrées sont ouvertes simultanément au moins en partie et peuvent être maintenues dans cette position de rinçage.

4. Installation d'osmose inverse pour petites quantités selon l'une des revendications précédentes, **caractérisée par** une conduite de rinçage (20) entre les deux soupapes, la conduite de rinçage (20) contournant une chambre de travail prévue dans la pompe de perméat.

5. Installation d'osmose inverse pour petites quantités selon l'une des revendications précédentes, **caractérisée en ce que** la combinaison de soupape pilote et d'ouverture de canal de commande (109, 121) est conçue et commandée de telle sorte que les deux soupapes intégrées (13) et (15) sont ouvertes simultanément au moins en partie et **en ce que** la durée de l'ouverture commune peut être commandée.

6. Installation d'osmose inverse pour petites quantités selon l'une des revendications précédentes, **caractérisée en ce que** la combinaison de soupape pilote et d'ouverture de canal de commande (109, 121) est conçue et commandée de telle sorte qu'une dérivation définie est créée à la soupape (112).

7. Installation d'osmose inverse pour petites quantités selon l'une des revendications précédentes, **caractérisée en ce que** la combinaison de soupape pilote et d'ouverture de canal de commande (109, 121) et/ou la pompe de perméat (4) ou des parties de la pompe de perméat sont placées dans le corps d'une unité formant collecteur.

8. Installation d'osmose inverse pour petites quantités selon l'une des revendications précédentes, **caractérisée en ce que** la pompe de perméat (4) est raccordée de façon optionnelle à l'eau brute et non au concentrat.

9. Utilisation d'une pompe de perméat munie d'une unité de refoulement (12) et de deux canaux de commande (112, 113), raccordée à la conduite de concentrat et à la conduite de perméat d'un module d'osmose inverse, deux soupapes commandées alternativement par l'unité de refoulement (12) en fonction de la position, à savoir une soupape d'entrée de concentrat (13) et une soupape de sortie de concentrat (15), étant intégrées dans une combinaison commune de soupape pilote et d'ouverture de canal de commande (109, 121), dans une installation d'osmose inverse pour petites quantités selon l'une des revendications 1 à 8.
